# EUROPÄISCHE PATENTSCHRIFT

(11) **EP 3 660 609 B1**
(45) Veröffentlichungstag und Bekanntmachung des Hinweises auf die Patenterteilung: **23.08.2023**
(21) Anmeldenummer: 19205027.6
(22) Anmeldetag: 24.10.2019
(51) Int. Cl.: G05B 19/409

(54) **BEDIENPULT**
CONTROL PANEL
PUPITRE DE COMMANDE

(30) Priorität: 09.11.2018 DE 102018128116
(43) Veröffentlichungstag der Anmeldung: 03.06.2020
(73) Patentinhaber: Liebherr-Verzahntechnik GmbH, 87437 Kempten (DE)
(72) Erfinder: Pruschek, Dr. Peter, 87459 Pfronten (DE); Karl, Thomas, 87471 Durach (DE); Strebelow, Alexander, 88142 Wasserburg (DE)
(74) Vertreter: Behr, Wolfgang

(56) Entgegenhaltungen:
- WO-A1-89/11382
- WO-A1-2007/066166
- DE-A1- 3 527 511
- DE-A1-102012 005 975
- DE-A1-102012 013 773
- DE-U1- 29 519 355
- US-A1- 2015 086 667

## Beschreibung

Die vorliegende Erfindung betrifft ein Bedienpult zur Bedienung einer Werkzeugmaschine, wobei das Bedienpult mindestens eine erste und mindestens eine zweite Bedieneinheit aufweist. Beide Bedieneinheiten weisen jeweils mindestens einen Bildschirm und mindestens ein Eingabeelement auf. Die zweite Bedieneinheit ist portabel betreibbar.

Aus dem Stand der Technik ist es bekannt, portable Bedieneinheiten beispielsweise zur Ansteuerung einzelner Achsen einer Werkzeugmaschine einzusetzen. Diese weisen jedoch üblicherweise lediglich einen geringen Funktionsumfang auf, und dienen lediglich als optionales Eingabeelement. Weiterhin weisen solche portablen Bedieneinheiten üblicherweise lediglich kleine LCD-Displays auf.

Aus den Druckschriften DE 10 2012 013 773 A1, DE 10 2010 051 639 A1 und DE 10 2007 050 073 B4 sind zweiteilige oder portable Bedienpulte bekannt.

Druckschrift DE 35 27 511 A1 zeigt eine numerische Steuervorrichtung, in der getrennte Konsolen vorgesehen sind, eine zur Eingabe von Betriebs- und Bedienungsdaten und die andere zur Ausführung anderer Operationen, wie z.B. Eingabe von Programmen und Überwachen des Betriebs des Gerätes.

Druckschrift WO 89/11382 A1 zeigt eine Robotersteuervorrichtung mit einer Bedieneinheit, bei welcher Bedieneinheiten zur Verwendung beim Einlernen der Position eines Arbeitspunkts und anderer Vorgänge über Kommunikationskabel mit einem Robotersteuerungsvorrichtungskörper verbunden sind, so dass die Bedieneinheiten in Bezug auf den Robotersteuerungsvorrichtungskörper bewegt werden können. Das Einlernen eines Roboters durch einen Bediener erfolgt über die beiden Bedienelemente, die in die Nähe eines Roboterkörpers gebracht werden. Darüber hinaus wird der größte Teil eines Robotersteuerungsvorgangs über das leichte, miniaturisierte Teach-Bedienfeld durchgeführt. Darüber hinaus erfolgt die Bearbeitung eines Programms und die Eingabe der Bedingungen für verschiedene Aktionen eines Roboters bei Bedarf über das zweite Bedienfeld, das mit einem größeren Display und einer Vielzahl von Bedientasten versehen ist.

DE 10 2012 005 975 A1 zeigt eine Vorrichtung zum Bedienen einer mit einem Handhabungsgerät ausgestatteten Maschine, insbesondere einer Spritzgießmaschine. Dabei ist ein erstes an der Maschine befestigtes stationäres Bediengerät und ein zweites mobiles Bediengerät vorgesehen, wobei jedes Bediengerät Ein- und Ausgabemittel aufweist, wobei das stationäre Bediengerät sowohl zum Bedienen der Maschine als auch zum Bedienen des Handhabungsgeräts ausgestaltet ist und wobei das mobile Bediengerät sowohl zum Bedienen des Handhabungsgeräts als auch zum Bedienen der Maschine ausgestaltet ist.

Weiterhin sind portable Bedieneinheiten bekannt, welche jedoch lediglich den Inhalt der Haupt-Bedieneinheit spiegeln.

Aufgabe der vorliegenden Erfindung ist es, ein Bedienpult mit einer ersten und einer zweiten Bedieneinheit zur Verfügung zu stellen, welches eine verbesserte Bedienbarkeit zur Verfügung stellt.

Diese Aufgabe wird durch ein Bedienpult gemäß Anspruch 1 gelöst. Bevorzugte Ausgestaltungen der vorliegenden Erfindung sind Gegenstand der Unteransprüche.

Die vorliegende Erfindung umfasst ein Bedienpult zur Bedienung einer Werkzeugmaschine mit mindestens einer ersten und einer zweiten Bedien-Einheit, wobei beide Bedien-Einheiten jeweils mindestens einen Bildschirm und mindestens ein Eingabeelement umfassen, und wobei die zweite Bedien-Einheit portabel betreibbar ist. Erfindungsgemäß ist vorgesehen, dass eine erste Gruppe an Bedienfunktionen der Werkzeugmaschine nur über die erste Bedien-Einheit und eine zweite Gruppe an Bedienfunktionen der Werkzeugmaschine nur über die zweite Bedien-Einheit zur Verfügung stehen.

Die beiden Bedieneinheiten ergänzen sich daher komplementär bei der Bedienung der Werkzeugmaschine. Durch diese Aufteilung der Bedienfunktionen werden die einzelnen Bedieneinheiten einfacher bedienbar, da weniger Bedienfunktionen in eine einzige Bedieneinheit gepackt werden müssen. Insbesondere muss die erste Bedieneinheit nicht mehr sämtliche Bedienfunktionen zur Verfügung stellen und kann daher einfacher bedienbar gestaltet werden.

Gemäß der vorliegenden Erfindung weisen die Bildschirme beider Bedien-Einheiten jeweils mindestens eine Auflösung von 50.000 Bildpunkten auf. Anders als bei vielen portablen Bedieneinheiten aus dem Stand der Technik ist die zweite Bedieneinheit gemäß der vorliegenden Erfindung nicht mit einem einfachen LCD-Display, welches nur wenige Informationen wiedergeben kann, ausgestattet, sondern mit einem vollwertigen Bildschirm. Insbesondere weisen die Bildschirme beider Bedien-Einheiten jeweils eine Auflösung von mindestens 300.000 Bildpunkten auf.

In einer möglichen Ausgestaltung der vorliegenden Erfindung stellen die im Bildschirm der zweiten Bedieneinheit dargestellten Inhalte keine exakt gleiche oder nur in der Größe skalierte Darstellung des aktuellen Bildschirminhaltes des Bildschirms der ersten Bedieneinheit dar. Vielmehr ergänzen die im Bildschirm der zweiten Bedieneinheit dargestellten Inhalte die im Bildschirm der ersten Bedieneinheit dargestellten Inhalte.

Gemäß der vorliegenden Erfindung ist mindestens einer der Bildschirme der Bedieneinheiten als Touch-Screen ausgestaltet.

In einer bevorzugten Ausgestaltung der vorliegenden Erfindung sind die Bildschirme beider Bedieneinheiten als Touch-Screen ausgestaltet. Hierdurch wird eine einfachere und intuitivere Bedienerführung ermöglicht. Weiterhin kann die Anzahl von haptischen Eingabeelementen reduziert werden.

In einer möglichen Ausgestaltung werden alle Eingabeelemente der ersten und/oder zweiten Bedieneinheit über den jeweiligen Touch-Screen zur Verfügung gestellt. Bevorzugt umfassen die erste und/oder zweite Bedieneinheit jedoch neben dem jeweiligen Touch-Screen eines oder mehrere haptische Eingabeelemente wie einen oder mehrere Tasten, Schalter, Schieber und/oder Drehknöpfe.

In einer möglichen Ausgestaltung der vorliegenden Erfindung ist die zweite Bedieneinheit über eine mechanische und/oder elektro-mechanische Kopplungsanordnung in einer definierten Kopplungsposition lösbar mit der ersten Bedieneinheit verbindbar, so dass beide Bedien-Einheiten parallel zueinander zur Bedienung einsetzbar sind. In der gekoppelten Position bilden die beiden Bedieneinheiten daher lediglich getrennte Eingabebereiche eines einheitlichen Bedienportals.

In einer möglichen Ausgestaltung der vorliegenden Erfindung sind die Bildschirme der ersten und der zweiten Bedien-Einheit in der Kopplungsposition um eine horizontale Achse verschwenkt mit einem Winkel zueinander angeordnet. Hierdurch wird die gleichzeitige Sicht des Benutzers auf beide Bildschirme verbessert.

In einer ersten Ausgestaltung ist der Winkel zwischen den Bildschirmen fest vorgegeben. In einer zweiten Ausgestaltung ist der Winkel zwischen den Bildschirmen einstellbar, insbesondere über eine Schwenkachse zwischen dem Bildschirm der ersten Bedieneinheit und einer Kopplungsanordnung der ersten Bedieneinheit zur Ankopplung der zweiten Bedieneinheit.

In einer möglichen Ausgestaltung der vorliegenden Erfindung umfasst die zweite Bedieneinheit einen Not-Aus-Schalter und/oder einen Zustimm-Taster.

Dadurch, dass die zweite Bedieneinheit mit einem Not-Aus-Schalter ausgestattet ist, können sicherheitsrelevante Bedienfunktionen über die zweite Bedieneinheit zur Verfügung gestellt werden.

Der Zustimm-Taster weist bevorzugt eine Mittelstellung auf, in welcher er gehalten werden muss, damit eine sicherheitsrelevante Funktion, beispielsweise das Verfahren einer Achse der Werkzeugmaschine, durchgeführt wird. Befindet sich der Zustimm-Taster dagegen nicht in der Mittelstellung, sondern wurde zu wenig oder zu stark gedrückt, wird die sicherheitsrelevante Funktion blockiert.

In einer ersten Ausgestaltung der vorliegenden Erfindung umfasst die erste Bedieneinheit keinen Not-Aus-Schalter. Aller sicherheitsrelevanten Funktionen werden in diesem Fall über die zweite Bedieneinheit zur Verfügung gestellt.

In einer zweiten Ausgestaltung der vorliegenden Erfindung umfasst die erste Bedieneinheit ebenfalls einen Not-Aus-Schalter. Erkennt eine sich im Bereich der ersten Bedieneinheit befindliche Bedienperson daher eine kritische Situation, kann auch sie die Werkzeugmaschine stilllegen. Bevorzugt werden aber auch in diesem Fall alle sicherheitsrelevanten Funktionen über die zweite Bedieneinheit zur Verfügung gestellt.

In einer möglichen Ausgestaltung der vorliegenden Erfindung umfasst die erste Bedieneinheit keinen Zustimm-Taster, da über diese ohnehin keine sicherheitsrelevanten Funktionen zur Verfügung gestellt werden, welche Zustimmt werden müssten.

In einer möglichen Ausgestaltung der vorliegenden Erfindung steht die zweite Bedieneinheit drahtlos mit der ersten Bedieneinheit in Verbindung. Durch die drahtlose Verbindung wird die Portabilität der zweiten Bedieneinheit erhöht. Um die Not-Aus-Funktionalität der zweiten Bedieneinheit sicher zu stellen, ist bevorzugt eine besonders gesicherte und/oder verfügbare Drahtlos-Schnittstelle vorgesehen. Bspw. kann die Drahtlosschnittstelle redundant ausgelegt sein.

In einer möglichen Ausgestaltung der vorliegenden Erfindung steht die zweite Bedieneinheit über ein Kabel mit der ersten Bedieneinheit in Verbindung. Durch die kabelgebundene Verbindung kann insbesondere sichergestellt werden, dass die Not-Aus-Funktionalität der zweiten Bedieneinheit uneingeschränkt zur Verfügung steht.

Bevorzugt weist das Kabel, über welches die zweite Bedieneinheit mit der ersten Bedieneinheit in Verbindung steht, eine Steckverbindung auf, durch welche die Verbindung lösbar hergestellt werden kann.

In einer möglichen Ausgestaltung der vorliegenden Erfindung ist die zweite Bedieneinheit zur Nutzung mit mehreren Werkzeugmaschinen umschaltbar. Die zweite Bedieneinheit kann daher von einer ersten Werkzeugmaschine getrennt und mit einer zweiten Werkzeugmaschine verbunden werden, und bei beiden Werkzeugmaschinen jeweils zur Ansteuerung genutzt werden.

In einer möglichen Ausgestaltung der vorliegenden Erfindung ist die erste Bedieneinheit um eine horizontale Schwenkachse schwenkbar an der Werkzeugmaschine angeordnet. Hierdurch kann der Winkel des Bildschirms der ersten Bedieneinheit zur Vertikalen eingestellt werden.

In einer möglichen Ausgestaltung der vorliegenden Erfindung weist die zweite Bedieneinheit eine erste und eine zweite Untereinheit auf, wobei die erste Untereinheit den Bildschirm umfasst und lösbar mit der zweiten Untereinheit verbunden ist, und wobei die zweite Untereinheit mindestens ein haptisches Eingabeelement, insbesondere einen Not-Aus-Schalter umfasst.

In einer möglichen Ausgestaltung der vorliegenden Erfindung ist die erste Untereinheit drahtlos betreibbar. Hierdurch ist diese noch flexibler einsetzbar.

In einer möglichen Ausgestaltung der vorliegenden Erfindung steht über die erste Untereinheit, ist diese von der zweiten Untereinheit getrennt, nur eine Untergruppe der zweiten Gruppe an Bedienfunktionen zur Verfügung. Insbesondere können sicherheitsrelevante Bedienfunktionen wie beispielsweise das Verfahren einer Achse nur dann ausgelöst werden, wenn die erste Untereinheit mit der zweiten Untereinheit verbunden ist. Hierdurch wird sichergestellt, dass der an der zweiten Bedieneinheit angeordnete Not-Aus-Schalter einer Bedienperson zur Verfügung steht, wenn diese eine sicherheitsrelevante Funktion auslöst.

Im folgenden werden mögliche über die erste bzw. die zweite Bedieneinheit ansteuerbare Funktionen bzw. entsprechende erste und zweite Bedienfunktionen, welche ausschließlich über die erste und zweite Bedieneinheit ansteuerbar sind, näher beschrieben:
In einer möglichen Ausgestaltung der vorliegenden Erfindung dient die erste Gruppe von Bedienfunktionen der Programmierung der Werkzeugmaschine, insbesondere zur Eingabe von Werkzeugdaten, Werkstückdaten und/oder Vorrichtungsdaten und/oder zum Aufruf von Servicefunktionen.

In einer möglichen Ausgestaltung der vorliegenden Erfindung werden Maschinenstatusinformationen auf dem Bildschirm der ersten Bedieneinheit angezeigt.

In einer möglichen Ausgestaltung der vorliegenden Erfindung erfolgt eine manuelle Ansteuerung mindestens eines Aktors der Werkzeugmaschine ausschließlich über die zweite Bedieneinheit.

Bevorzugt handelt es sich bei dem Aktor, welcher ausschließlich über die zweite Bedieneinheit manuell ansteuerbar ist, um einen Antrieb einer Bewegungsachse eines Bearbeitungskopfes der Werkzeugmaschine.

In einer möglichen Ausgestaltung der vorliegenden Erfindung erfolgt eine manuelle Ansteuerung von Aktoren und/oder sicherheitsrelevanten Funktionen der Werkzeugmaschine ausschließlich über die zweite Bedieneinheit.

In einer möglichen Ausgestaltung der vorliegenden Erfindung ist eine Öffnung einer Sicherheitsumzäunung der Werkzeugmaschine ausschließlich über die zweite Bedieneinheit auslösbar.

In einer möglichen Ausgestaltung der vorliegenden Erfindung sind Achsbewegungen der Werkzeugmaschine und/oder einer Werkstückautomation, welche bei geöffneter Sicherheitsumzäunung erfolgen, ausschließlich über die zweite Bedieneinheit auslösbar.

In einer möglichen Ausgestaltung der vorliegenden Erfindung dient die zweite Gruppe von Bedienfunktionen der Anpassung einer durch die erste Gruppe von Bedienfunktionen vorgenommenen Programmierung der Werkzeugmaschine im Betrieb.

In einer möglichen Ausgestaltung der vorliegenden Erfindung dient die zweite Gruppe von Bedienfunktionen der Eingabe von für einen konkreten Bearbeitungsvorgang spezifischen Werkzeugdaten, Werkstückdaten und/oder Vorrichtungsdaten.

In einer möglichen Ausgestaltung der vorliegenden Erfindung dient die zweite Gruppe von Bedienfunktionen der Ansteuerung der Werkzeugmaschine im Betrieb.

In einer möglichen Ausgestaltung der vorliegenden Erfindung umfasst die zweite Gruppe von Bedienfunktionen eine oder mehrere der folgenden Ansteuer- und/oder Eingabefunktionen:
- Automatikbetrieb ein-/ausschalten
- Verfahren von Achsen, insbesondere von Achsen eines Bearbeitungskopfes
- Ansteuerung Vorschubgeschwindigkeit und/oder Drehzahl des Werkzeugs und/oder Werkstücks
- Umschaltung Eilgang
- Manuelles Einmitten auf der Bearbeitungsposition,
- Kühlmittel an/aus,
- Tür öffnen anfordern,
- Automation teachen, bedienen und/oder in Aufstartposition verfahren,
- Werkzeugwechsel,
- Werkzeugerkennung über Kamera,
- Einrichtebetrieb mit offener oder geschlossener Spritzschutztür,
- Erweiterter Einrichtebetrieb bei geöffneter Spritzschutztür,
- Messdaten zum Werkstück und/oder Werkzeug eingeben,
- Werkzeugdaten, Werkstückdaten und/oder Vorrichtungsdaten ändern.

Mögliche Ausgestaltungen der haptischen Eingabeelemente der ersten und der zweiten Bedieneinheit werden im folgenden dargestellt:
In einer möglichen Ausgestaltung der vorliegenden Erfindung weist die erste Bedieneinheit zusätzlich zu einem als Eingabeeinheit dienenden Touch-Screen ein nummerisches Tastenfeld und/oder Pfeiltasten als haptische Eingabeelemente auf.

Bevorzugt umfasst die erste Bedieneinheit darüber hinaus nicht mehr als 10 weitere haptische Eingabeelemente.

In einer möglichen Ausgestaltung der vorliegenden Erfindung weist die zweite Bedieneinheit zusätzlich zu einem als Eingabeeinheit dienenden Touch-Screen einen Drehknopf und/oder zwei Plus/Minustasten als haptische Eingabeelemente auf.

Bevorzugt umfasst die zweite Bedieneinheit darüber hinaus nicht mehr als 10 weitere haptische Eingabeelemente. Dabei kann es sich wie oben beschrieben insbesondere um einen Not-Aus-Taster und/oder eine Zustimm-Taste handeln.

Die vorliegende Erfindung umfasst weiterhin eine Werkzeugmaschine mit einem oder mehreren Bedienpulten, wie sie oben näher beschrieben wurden.

In einer möglichen Ausgestaltung der vorliegenden Erfindung umfasst die Werkzeugmaschine eine Werkstückaufnahme und eine Werkzeugaufnahme, welche jeweils um eine Drehachse antreibbar sind.

Bevorzugt ist die Werkzeugaufnahme an einem Bearbeitungskopf angeordnet, welcher über eine oder mehrere Bewegungsachsen relativ zur Werkstückaufnahme verfahrbar ist.

Insbesondere kann der Bearbeitungskopf über eine Linearachse Z in einer Richtung parallel zur Drehachse der Werkstückaufnahme verfahrbar sein.

Insbesondere kann der Achsabstand zwischen der Werkstückaufnahme und der Werkzeugaufnahme über eine Linearachse X veränderbar sein.

Insbesondere kann der Bearbeitungskopf über eine Schwenkachse A verschwenkbar sein, um den Achskreuzwinkel zwischen der Werkstückaufnahme und der Werkzeugaufnahme einzustellen, wobei die Schwenkachse A bevorzugt senkrecht auf der Drehachse der Werkstückaufnahme und/oder der Drehachse der Werkzeugaufnahme steht.

Bevorzugt handelt es sich bei den Drehachsen und/oder den Bewegungsachsen des Bearbeitungskopfes um NC-Achsen.

In einer möglichen Ausgestaltung der vorliegenden Erfindung handelt es sich bei der erfindungsgemäßen Werkzeugmaschine um eine Verzahnmaschine.

In einer möglichen Ausgestaltung der vorliegenden Erfindung umfasst die Werkzeugmaschine eine dritte Bedieneinheit, welche getrennt von der ersten Bedieneinheit an einer anderen Stelle der Werkzeugmaschine angeordnet ist. Die dritte Bedieneinheit kann stationär an der Werkzeugmaschine angeordnet sein, beispielsweise an einer Sicherheitsumzäunung, oder portabel ausgeführt sein.

In einer möglichen Ausgestaltung der vorliegenden Erfindung weist die dritte Bedieneinheit die gleiche Hardware-Ausgestaltung auf wie die zweite Bedieneinheit. Insbesondere kann die dritte Bedieneinheit den gleichen Bildschirm und/oder die gleichen haptischen Eingabeelemente aufweisen, wie dies oben für die zweite Bedieneinheit näher beschrieben ist.

In einer möglichen Ausgestaltung der vorliegenden Erfindung steht eine dritte Gruppe an Bedienfunktionen der Werkzeugmaschine nur über die dritte BedienEinheit zur Verfügung. Beispielsweise kann es sich hierbei um Bedienfunktionen für einen Werkzeugwechsler und/oder eine Automation handeln.

Die Werkzeugmaschine kann eine Sicherheitsumzäunung aufweisen, an welcher das erfindungsgemäße Bedienpult angeordnet ist.

Die vorliegende Erfindung wird nun anhand von Ausführungsbeispielen und Zeichnungen näher beschrieben.

Dabei zeigen:
- Figur 1:: ein Ausführungsbeispiel eines erfindungsgemäßen Bedienpults,
- Figur 2:: die zweite Bedieneinheit des in Figur 1 gezeigten Ausführungsbeispiels,
- Figur 3:: eine erste Untereinheit der in Figur 2 gezeigten zweiten Bedieneinheit und
- Figur 4:: ein Ausführungsbeispiel einer erfindungsgemäßen Werkzeugmaschine mit einem Ausführungsbeispiel eines erfindungsgemäßen Bedienpults.

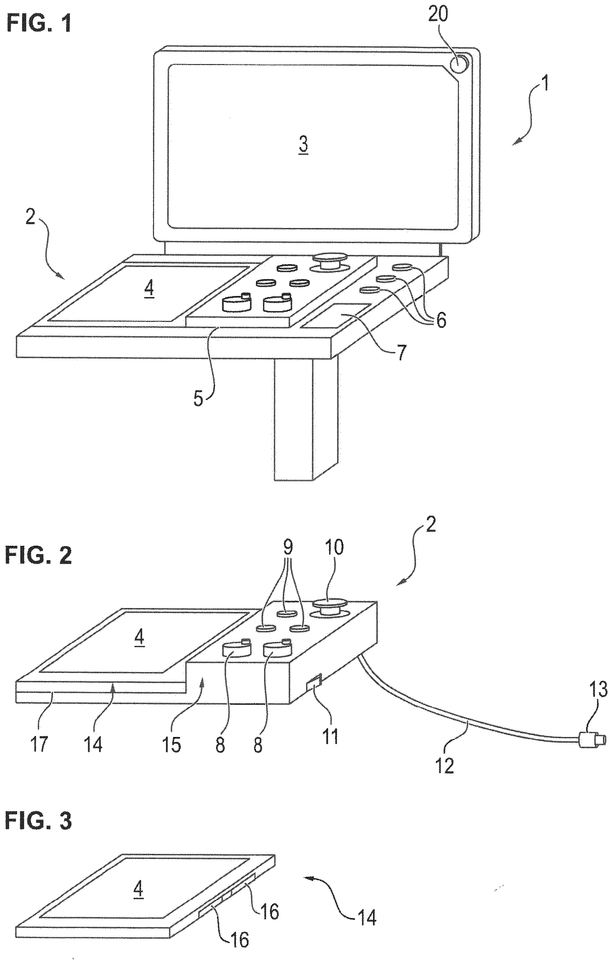

Figuren 1 und 2 zeigen ein Ausführungsbeispiel eines erfindungsgemäßen Bedienpults zur Bedienung einer Werkzeugmaschine. Das Bedienpult umfasst eine erste Bedieneinheit 1 mit einem Bildschirm 3 und haptischen Eingabeelementen 6 und 7. Weiterhin umfasst das Bedienpult eine zweite Bedieneinheit 2, welche portabel betreibbar ist und einen Bildschirm 4 sowie haptische Eingabeelemente 8 bis 11 aufweist.

Die erste Bedieneinheit 1 dient als stationäre Bedieneinheit, und ist üblicherweise fest mit der Werkzeugmaschine bzw. einer Sicherheitsumzäunung der Werkzeugmaschine verbunden. In einer bevorzugten Ausführungsform erfolgt die Verbindung zwischen der ersten Bedieneinheit und der Werkzeugmaschine bzw. der Sicherheitsumzäunung über eine horizontale Schwenkachse, sodass die Neigung des Bildschirms 3 veränderbar ist. Die erste Bedieneinheit 1 weist eine Aufnahme 5 auf, an welcher die zweite Bedieneinheit 2 lösbar fixierbar ist. Die Aufnahme 5 kann der rein mechanischen Kopplung der ersten Bedieneinheit 1 mit der zweiten Bedieneinheit 2 dienen. Alternativ kann diese eine elektro-mechanische Kopplung bereit stellen, d.h. neben der mechanischen Kopplung eine elektrische Verbindung zur Verfügung zu stellen. Eine elektro-mechanische Kopplung ist insbesondere dann von Vorteil, wenn die zweite Bedieneinheit anders als im Ausführungsbeispiel drahtlos betrieben wird.

In der mit der ersten Bedieneinheit gekoppelten Position ist die zweite Bedieneinheit im Ausführungsbeispiel unterhalb des Bildschirms 3 angeordnet. Insbesondere steht der Bildschirm 4 der zweiten Bedieneinheit in der gekoppelten Position einen Winkel relativ zum Bildschirm 3 der ersten Bedieneinheit auf und ist gegenüber diesem um eine horizontale Achse verkippt.

Erfindungsgemäß werden über die beiden Bedieneinheiten jeweils unterschiedliche Bedienfunktionen der Werkzeugmaschine zur Verfügung gestellt. Weiterhin werden auf den jeweiligen Bildschirmen 3 und 4 unterschiedliche, sich ergänzende Informationen angezeigt. Die portable zweite Bedieneinheit 2 stellt daher anders als im Stand der Technik keine optionale Ergänzung der ersten Bedieneinheit dar, welche lediglich einzelne Bedienfunktionen, welche auch über die erste Bedieneinheit zur Verfügung stehen, noch einmal portabel zur Verfügung stellt, sondern bietet zumindest auch Bedienfunktionen, welche auf der ersten Bedieneinheit nicht zur Verfügung stehen, und ergänzt daher die erste Bedieneinheit und die hierdurch gegebenen Bedienfunktionen um weitere Bedienfunktionen.

Das erfindungsgemäße Bedienpult ist dabei bevorzugt so ausgestaltet, dass beide Bedieneinheiten parallel eingesetzt werden können, um die Werkzeugmaschine zu bedienen. Ist die zweite Bedieneinheit an der ersten Bedieneinheit angeordnet, stellen die beiden Bedieneinheiten daher lediglich eine konzeptionelle Unterteilung der zur Verfügung stehenden Bedienfunktionen in zwei separate Bildschirme mit zugehörigen Eingabeelementen dar. Die Portabilität der zweiten Bedieneinheit ermöglicht es, die von der zweiten Bedieneinheit zur Verfügung gestellten Bedienfunktionen oder zumindest einen Teil dieser Bedienfunktionen örtlich flexibel anzusteuern. Dies ist insbesondere dann von Vorteil, wenn diese Bedienfunktionen eine unmittelbare Sicht auf Elemente der Werkzeugmaschine erfordern.

Die Bildschirme beider Bedieneinheiten weisen jeweils mindestens eine Auflösung von 50.000 Bildpunkten auf, bevorzugt eine Auflösung von mindestens 300.000 Bildpunkten. Hierdurch können auf beiden Bedieneinheiten jeweils umfangreiche Informationen angezeigt und komplexe Bedienfunktionen zur Verfügung gestellt werden.

Im Ausführungsbeispiel sind die Bildschirme 3 und 4 beider Bedieneinheiten jeweils als Touchscreen ausgestaltet. In möglichen Ausgestaltungen der vorliegenden Erfindung können die Touch-Funktionen der Touchscreens die einzigen Eingabeelemente der jeweiligen Bedieneinheiten darstellen. Bei den gezeigten Ausführungsbeispielen umfassen jedoch beide Bedieneinheiten neben der Touch-Funktion weitere, haptische Eingabeelemente.

Wie in Figur 1 dargestellt umfasst die zweite Bedieneinheit im Ausführungsbeispiel einen Not-Aus-Schalter 10. Hierdurch kann die Werkzeugmaschine über die zweite Eingabeeinheit stillgesetzt werden.

Die zweite Bedieneinheit 2 weist im Ausführungsbeispiel weiterhin mindestens einen Drehknopf 8 auf. Bevorzugt ist der mindestens eine Drehknopf 8 mit unterschiedlichen Funktionen belegt, welche über andere haptische Eingabeelemente und/oder den Touchscreen 4 ausgewählt werden können.

Weiterhin sind Taster 9 vorgesehen, durch welche einzelne Funktionen angewählt und/oder ein- oder ausgeschaltet werden können.

Zudem umfasst die zweite Bedieneinheit im Ausführungsbeispiel einen Zustimmtaster 11. Dieser muss in einer Mittelstellung gehalten werden, damit Achsbewegungen stattfinden können. Wird der Zustimmtaster zu wenig oder zu viel gedrückt, findet keine Bewegung statt oder die Bewegung wird sofort stillgesetzt (Panikfunktion).

Im Ausführungsbeispiel sind die haptischen Bedienelemente 6 und 7 der ersten Bedieneinheit in einem Bedienbereich der ersten Bedieneinheit angeordnet, welcher sich unterhalb des Bildschirms 3 befindet und in einem Winkel zu dem Bildschirm 3 steht. Der Winkel des Bedienbereichs der ersten Bedieneinheit kann dabei dem Winkel entsprechen, in welchem auch die zweite Bedieneinheit an der ersten Bedieneinheit anordenbar ist.

Im Ausführungsbeispiel handelt es sich bei den haptischen Eingabeelementen der ersten Bedieneinheit 1 um ein numerisches Tastenfeld 7. Dieses ermöglicht die einfache Eingabe von Zahlenwerten. Weiterhin sind Pfeiltasten 6 vorgesehen, welche der Navigation dienen. Insbesondere sind Pfeiltasten auf/ab und links/rechts vorgesehen, um zwischen Eingabefeldern, welche auf dem Bildschirm 3 angezeigt sind, hin- und herzuspringen.

Im Ausführungsbeispiel weist auch die erste Bedieneinheit 1 einen Not-Aus-Schalter 20 auf, über welchen die Werkzeugmaschine stillgesetzt werden kann. Ein solcher Not-Aus-Schalter 20 an der ersten Bedieneinheit 1 ist jedoch nicht zwingend erforderlich, da im Ausführungsbeispiel über die erste Bedieneinheit 1 keine Bedienfunktionen angesteuert werden können, welche zu einer Gefährdung eines Bedieners führen könnten.

Im Ausführungsbeispiel steht die zweite, portable Bedieneinheit 2 über ein Kabel 12 mit der ersten Bedieneinheit 1 bzw. der Steuerung der Werkzeugmaschine in Verbindung. Hierdurch wird die Verfügbarkeit des Not-Aus-Schalters 10 sichergestellt. Bevorzugt erfolgt die Verbindung über einen Stecker 13. Alternativ kann die zweite, portable Bedieneinheit 2 drahtlos mit der ersten Bedieneinheit 1 bzw. der Steuerung der Werkzeugmaschine in Verbindung stehen, wenn diese mechanisch von der ersten Bedieneinheit getrennt ist.

Die zweite Bedieneinheit kann auch zur Ansteuerung einer anderen Werkzeugmaschine eingesetzt werden.

Gemäß einer möglichen Weiterentwicklung der vorliegenden Erfindung, welche in Figuren 2 und 3 dargestellt ist, umfasst die zweite Bedieneinheit 2 ihrerseits zwei Untereinheiten 14 und 15. Die erste Untereinheit 14 umfasst den Bildschirm 4, und kann von der zweiten Untereinheit 15, welche die haptischen Eingabeelemente umfasst, getrennt werden. Die zweite Untereinheit 15 weist hierfür eine Aufnahme 17 auf, in welche die erste Untereinheit 14 eingesetzt werden kann, sodass beide gemeinsam als eine Einheit betrieben werden können. Die erste Untereinheit 14 weist Anschlüsse 16 auf, welche in der gekoppelten Stellung mit der zweiten Untereinheit 15 verbunden sind.

Bevorzugt ist die erste Untereinheit 14 drahtlos mit der zweiten Untereinheit 15 und/oder einer anderen Schnittstelle der Werkzeugmaschine verbindbar, wenn diese von der zweiten Untereinheit 15 getrennt wurde. Die erste Untereinheit 14 kann daher noch flexibler eingesetzt werden als die im Ausführungsbeispiel drahtgebunden ausgeführte zweite Bedieneinheit insgesamt.

Bevorzugt können über die erste Untereinheit 14 jedoch nur noch nichtsicherheitsrelevante Bedienfunktionen angesteuert werden, wenn diese von der zweiten Untereinheit gelöst ist, da dem Bediener an der ersten Untereinheit 14 kein Not-Aus-Schalter zur Verfügung steht. Die erste Untereinheit 14 kann daher, wird sie getrennt von der zweiten Untereinheit 15 eingesetzt, beispielsweise zur Dateneingabe zu Werkstücken und/oder Werkzeugen genutzt werden. Eine Ansteuerung von Bewegungsachsen der Maschine und/oder der Automation ist dagegen über die erste Untereinheit 14 nicht möglich, solange diese von der zweiten Untereinheit 15 getrennt ist.

Die soeben beschriebene Ausgestaltung mit einer zweiteiligen Ausführung der zweiten Bedieneinheit 2 stellt lediglich eine mögliche Ausführungsvariante dar. In einer alternativen Ausführungsvariante ist die zweite Bedieneinheit 2 dagegen einteilig ausgeführt, das heißt der Bildschirm 4 bildet einen festen Bestandteil der zweiten Bedieneinheit.

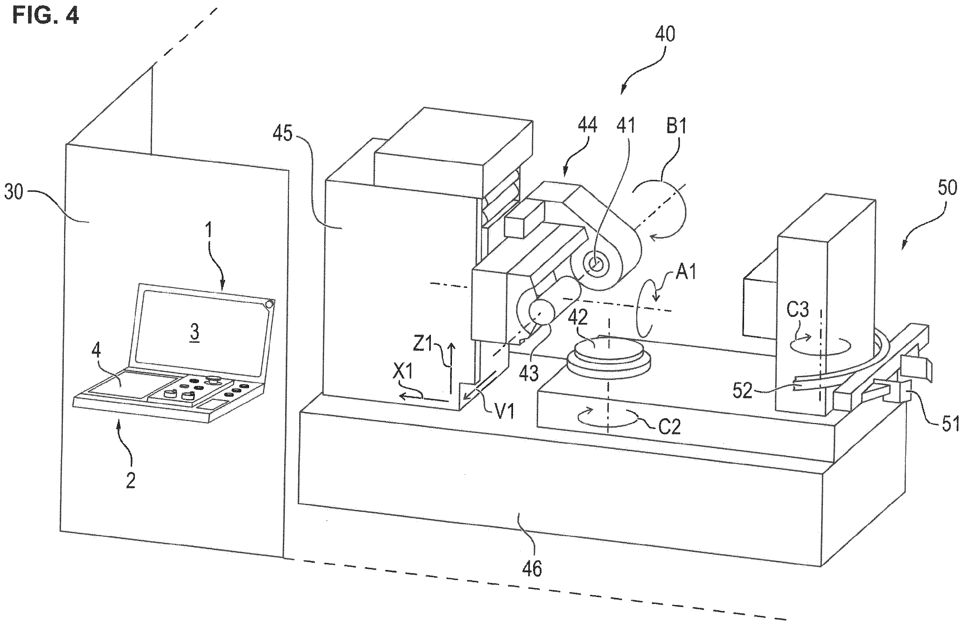

In Figur 4 ist ein Ausführungsbeispiel einer erfindungsgemäßen Werkzeugmaschine 40 mit einem erfindungsgemäßen Bedienportal dargestellt. Die Werkzeugmaschine 40 weist dabei eine lediglich teilweise dargestellte Sicherheitsumzäunung 30 auf, an deren Außenseite das Bedienportal angeordnet ist.

Die Werkzeugmaschine 40 weist im Ausführungsbeispiel eine Werkzeugaufnahme 41 und eine Werkstückaufnahme 42 auf, welche über Drehachsen B1 und C2 in Rotation versetzt werden können. Die Werkzeugaufnahme 41 ist an einem Bearbeitungskopf 44 angeordnet, welcher über eine Reihe von Bewegungsachsen relativ zur Werkstückaufnahme bewegbar ist, um das Werkstück zu bearbeiten.

Im Ausführungsbeispiel sind mehrere Linearachsen V1, X1 und Z1 vorgesehen. Weiterhin ist eine Schwenkachse A1 vorgesehen.

Im Ausführungsbeispiel ist der Bearbeitungskopf 44 an einem Werkzeugständer 45 über die Z1-Achse in einer Richtung parallel zur Drehachse C2 der Werkstückaufnahme verfahrbar. Der Maschinenständer 45 ist auf einem Maschinenbett 46 angeordnet, welcher auch die Werkstückaufnahme 42 trägt.

Weiterhin ist eine Automation 50 vorgesehen, welche die Werkzeugmaschine 40 mit zu bearbeitenden Werkstücken versorgt und bearbeitete Werkstücke abtransportiert. Im Ausführungsbeispiel ist ein Ringlader 52 vorgesehen, welcher einen Greifer 51 zum Greifen der Werkstücke aufweist. Über den Greifer werden bearbeitete Werkstücke von der Werkstückaufnahme 42 entnommen und zu bearbeitende Werkstücke auf der Werkstückaufnahme 42 angeordnet.

Die erfindungsgemäße Bedientafel dient sowohl der Bedienung der Werkzeugmaschine 40 als auch der Automation 50.

Die erste Bedieneinheit 1 dient der Maschinenprogrammierung, das heißt insbesondere der Eingabe von Werkzeugdaten, Werkstückdaten und Vorrichtungsdaten, sowie der Bereitstellung von Service-Funktionen. Hier werden die allgemeinen Daten für Werkzeuge, Werkstücke und Werkstückspannvorrichtungen eingegeben und die Bearbeitungsprogramme für die Werkstückbearbeitung ausgewählt und mit den notwendigen Programmdaten befüllt. Weiterhin erfolgen hier die weiteren Einstellungen und Eingaben für die Werkzeugmaschine. Zudem stellt die erste Bedieneinheit ein Software-Handbuch für die Werkzeugmaschine dar. Weiterhin wird auf dem Bildschirm 3 der überwiegende Anteil der Maschinenstatusinformation wiedergegeben.

Mithilfe der zweiten Bedieneinheit 2 wird die Werkzeugmaschine 40 sowie die Automation 50 während der Benutzung bedient. Mögliche Funktionen, welche über die zweite Bedieneinheit 2 zur Verfügung gestellt werden, sind dabei:
- Eingabe konkreter Werkstück-, Werkzeug- und/oder Vorrichtungsdaten für die Bearbeitung einer speziellen Aufgabe. Beispielweise kann vor der Bearbeitung der jeweils aktuelle Fräserdurchmesser, welcher sich beispielsweise durch Nachschleifen verändert haben kann, in die Werkzeugdatei eingetragen oder die gemessene Auflagehöhe für das Werkstück in der Vorrichtungsdatei gegenüber den ursprünglich programmierten Werten verändert werden.
- Verfahren von Achsen, insbesondere von Achsen des Bearbeitungskopfes 44 und/oder der Automation 50. Beispielsweise kann über einen Drehknopf 8 der zweiten Bedieneinheit die Drehzahl der Werkzeugaufnahme 41 und/oder der Werkstückaufnahme 42 und/oder die Vorschubgeschwindigkeit des Bearbeitungskopfes eingestellt werden. Der Drehknopf 8 kann hierfür mit mehreren Funktionen belegt sein, sodass die Achse, welche über den Drehknopf angesteuert wird, über den Touchscreen oder haptische Eingabeelemente ausgewählt wird. Weiterhin können zwei Tasten vorgesehen sein, durch welche die Achsrichtung angewählt werden kann, insbesondere als haptische Eingabeelemente.
- Ein- und Ausschalten des Kühlmittels. Zum Ein- und Ausschalten des Kühlmittels, mit welchem das Werkzeug gekühlt wird, können beispielsweise haptische Eingabeelemente an der zweiten Bedieneinheit 2 vorgesehen sein.
- Ein- und Ausschalten des Automatikbetriebs. Insbesondere kann der Bearbeitungszyklus über die zweite Bedieneinheit eingeschaltet und gestoppt werden. Hierfür kann ein haptisches Eingabeelement an der zweiten Bedieneinheit vorgesehen sein.
- Umschaltung in den Eilgang. Hierfür kann ein haptisches Eingabeelement an der zweiten Bedieneinheit 2 vorgesehen sein.
- Anforderung einer Türöffnung. Über die zweite Bedieneinheit kann das Öffnen einer Tür in der Sicherheitsumzäunung 30 angesteuert werden. Dies erfolgt bevorzugt über den Touchscreen.
- Bedienung der Automation, insbesondere Verfahren in eine Aufstartposition. Dies kann über einen Drehknopf und/oder andere haptische Eingabeelemente und/oder dem Touchscreen angesteuert werden.
- Ansteuerung eines Werkzeugwechsels.
- Einrichtbetrieb. Dieser kann beispielsweise das Einrichten eines Werkstückes auf der Bedienseite umfassen. Dabei kann es sich um einen Einrichtbetrieb mit offener oder geschlossener Spritzschutztür handeln. Weiterhin ist ein Einrichtbetrieb bei geöffneter Spritzschutztür, insbesondere unter Bewegung einer Werkzeugachse, ansteuerbar.
- Manuelles Einmitten auf der Bearbeitungsposition. Hierbei wird die Mitte eines Werkzeugzahns auf die Mitte einer Zahnlücke ausgerichtet.
- Teachen bestimmter Anfahrpositionen an der Automation 50. Die Automation kann dabei alternativ oder zusätzlich zu dem in Figur 4 gezeigten Ringlader eine Hubstation für ein externes Band, eine Roboterbeladung, einen Werkzeugspeicher mit Beladung auf der Maschinenrückseite umfassen.
- Werkzeugerkennung über eine Kamera. Dies kann beispielsweise dadurch erfolgen, dass die zweite Bedieneinheit eine Kamera aufweist, über welche QR-Codes auf dem Werkzeug erfasst werden.
- Kameraunterstützung für Einheiten mit beschränkter Sicht, beispielsweise für das Anfasfräsen.
- Ansteuerung von Bedienfunktionen innerhalb der Sicherheitsumzäunung.
- Korrekturen an Werkstückdaten, wenn aus dem Messraum Ergebnisse vorliegen und diese einen Eingriff erfordern. Beispielsweise kann eine Korrektur des Zahnweitenmaßes, Flankenausrichtungskorrekturen, etc. eingegeben werden.

Über die zweite Bedieneinheit werden daher vorrangig Vorgänge und Eingaben getätigt, welche direkt mit der Bearbeitung eines bestimmten Werkstückes zu tun haben, während über die erste Bedieneinheit allgemeinen Eingaben für Programme, Maschineneinstellungen und/oder Serviceaufgaben erfolgen.

Über die erste Bedieneinheit werden bevorzugt zunächst die allgemeinen Programmdaten für verschiedene Werkstücke, Werkzeuge und Vorrichtungen eingegeben, während über die zweite Bedieneinheit dann die konkreten Daten für die Bearbeitung einer speziellen Aufgabe eingegeben werden. Weiterhin erfolgt die manuelle Ansteuerung von Bewegungsachsen und/oder Aktoren der Werkzeugmaschine und/oder der Automation über die zweite Bedieneinheit.

Die zweite Bedieneinheit kann auf ihrer Rückseite mit einem Handgriff ausgestattet sein, an welchem die zweite Bedieneinheit bei der externen Bedienung gehalten wird.

Die zweite Bedieneinheit kann Befestigungselemente wie Magnete, Haken und/oder Klemmen aufweisen, um die zweite Bedieneinheit an weiteren Bedienstellen temporär befestigen zu können.

Weiterhin kann eine dritte Bedieneinheit, welche die gleiche Hardware-Ausgestaltung aufweist wir die zweite Bedieneinheit, unabhängig von der ersten Bedieneinheit als fest installierte Variante an anderen Stellen der Werkzeugmaschine und/oder der Sicherheitsumzäunung angeordnet werden, beispielsweise als Nebenbedienfeld für einen Werkzeugwechsler.

Im Ausführungsbeispiel ist die zweite Bedieneinheit kabelgebunden. Dabei kann eine automatische Wickelvorrichtung für das Kabel vorgesehen sein, welche das Kabel in die zweite Bedieneinheit einzieht.

In einer alternativen Ausgestaltung der vorliegenden Erfindung kann die zweite Bedieneinheit auch drahtlos mit der ersten Bedieneinheit und/oder der Steuerung kommunizieren.

Der Bildschirm 4 der zweiten Bedieneinheit 2 ist bevorzugt kleiner als der Bildschirm 3 der ersten Bedieneinheit 1.

## Patentansprüche

1. Bedienpult zur Bedienung einer Werkzeugmaschine mit mindestens einer ersten und einer zweiten Bedien-Einheit (1, 2),
wobei beide Bedien-Einheiten (1,2) jeweils mindestens einen Bildschirm (3,4) und mindestens ein Eingabeelement (3,4,6-11) umfassen, **dadurch gekennzeichnet, dass** die Bildschirme (3,4) beider Bedien-Einheiten (1,2) jeweils mindestens eine Auflösung von 50.000 Bildpunkten aufweisen, und wobei der Bildschirm (3,4) mindestens einer der Bedieneinheiten (1,2) als Touch-Screen ausgestaltet ist,
wobei die zweite Bedien-Einheit portabel betreibbar ist, und
wobei eine erste Gruppe an Bedienfunktionen der Werkzeugmaschine nur über die erste Bedien-Einheit (1) und eine zweite Gruppe an Bedienfunktionen der Werkzeugmaschine nur über die zweite Bedien-Einheit (2) zur Verfügung stehen.

2. Bedienpult nach Anspruch 1, wobei die Bildschirme beider Bedien-Einheiten (1,2) jeweils mindestens eine Auflösung 300.000 Bildpunkten und/oder wobei die Bildschirme (3,4) beider Bedieneinheiten als Touch-Screen ausgestaltet sind.

3. Bedienpult nach Anspruch 1 oder 2, wobei die im Bildschirm (4) der zweiten Bedieneinheit (2) dargestellten Inhalte keine exakt gleiche oder nur in der Größe skalierte Darstellung des aktuellen Bildschirminhaltes des Bildschirms (3) der ersten Bedieneinheit (1) darstellen.

4. Bedienpult nach einem der vorangegangenen Ansprüche, wobei die zweite Bedieneinheit (2) über eine mechanische und/oder elektro-mechanische Kopplungsanordnung (5) in einer definierten Kopplungsposition lösbar mit der ersten Bedieneinheit verbindbar ist, so dass beide Bedien-Einheiten (1,2) parallel zueinander zur Bedienung einsetzbar sind, wobei die Bildschirme (3,4) der ersten und der zweiten Bedien-Einheit (2) in der Kopplungsposition bevorzugt um eine horizontale Achse verschwenkt mit einem Winkel zueinander angeordnet sind.

5. Bedienpult nach einem der vorangegangenen Ansprüche, wobei die zweite Bedieneinheit einen Not-Aus-Schalter (10) und/oder einen Zustimm-Taster (11) umfasst.

6. Bedienpult nach einem der vorangegangenen Ansprüche, wobei die zweite Bedieneinheit (2) drahtlos oder über ein Kabel (12) mit der ersten Bedieneinheit (1) in Verbindung steht und/oder zur Nutzung mit mehreren Werkzeugmaschinen umschaltbar ist.

7. Bedienpult nach einem der vorangegangenen Ansprüche, wobei die zweite Bedieneinheit (2) eine erste und eine zweite Untereinheit (14, 15) aufweist, wobei die erste Untereinheit (14) den Bildschirm (4) umfasst und lösbar mit der zweiten (15) Untereinheit verbunden ist, und wobei die zweite Untereinheit (15) mindestens ein haptisches Eingabeelement, insbesondere einen Not-Aus-Schalter (10) umfasst, wobei die erste Untereinheit (14) bevorzugt drahtlos betreibbar ist und/oder wobei bevorzugt über die erste Untereinheit (14), ist diese von der zweiten Untereinheit (15) getrennt, nur eine Untergruppe der zweiten Gruppe an Bedienfunktionen zur Verfügung steht.

8. Bedienpult nach einem der vorangegangenen Ansprüche, wobei die erste Gruppe von Bedienfunktionen der Programmierung der Werkzeugmaschine, insbesondere der Eingabe von Werkzeugdaten, Werkstückdaten und/oder Vorrichtungsdaten und/oder zum Aufruf von Servicefunktionen dient und/oder wobei Maschinenstatusinformationen auf dem Bildschirm der ersten Bedieneinheit angezeigt werden.

9. Bedienpult nach einem der vorangegangenen Ansprüche, wobei eine manuelle Ansteuerung mindestens eines Aktors der Werkzeugmaschine ausschließlich über die zweite Bedieneinheit (2) erfolgt, wobei es sich bevorzugt um den Antrieb mindestens einer Bewegungsachse eines Bearbeitungskopfes (44) der Werkzeugmaschine handelt, und/oder wobei eine manuelle Ansteuerung von Aktoren der Werkzeugmaschine und/oder sicherheitsrelevanten Funktionen ausschließlich über die zweite Bedieneinheit (2) erfolgt.

10. Bedienpult nach einem der vorangegangenen Ansprüche, wobei eine Öffnung einer Sicherheitsumzäunung der Werkzeugmaschine und/oder Achsbewegungen der Werkzeugmaschine (40) und/oder einer Werkstückautomation (50), welche bei geöffneter Sicherheitsumzäunung erfolgen, ausschließlich über die zweite Bedieneinheit auslösbar sind.

11. Bedienpult nach einem der vorangegangenen Ansprüche, wobei die zweite Gruppe von Bedienfunktionen der Anpassung einer durch die erste Gruppe von Bedienfunktionen vorgenommenen Programmierung der Werkzeugmaschine im Betrieb und/oder der Eingabe von für einen konkreten Bearbeitungsvorgang spezifischen Werkzeugdaten, Werkstückdaten und/oder Vorrichtungsdaten und/oder der Ansteuerung der Werkzeugmaschine im Betrieb dient, wobei die zweite Gruppe von Bedienfunktionen insbesondere eine oder mehrere der folgenden Ansteuer- und/oder Eingabefunktionen umfasst:
- Automatikbetrieb ein-/ausschalten
- Verfahren von Achsen, insbesondere von Achsen eines Bearbeitungskopfes
- Ansteuerung Vorschubgeschwindigkeit und/oder Drehzahl des Werkzeugs und/oder Werkstücks
- Umschaltung Eilgang
- Manuelles Einmitten auf der Bearbeitungsposition,
- Kühlmittel an/aus,
- Tür öffnen anfordern,
- Automation teachen, bedienen und/oder in Aufstartposition verfahren,
- Werkzeugwechsel,
- Werkzeugerkennung über Kamera,
- Einrichtebetrieb mit offener oder geschlossener Spritzschutztür,
- Erweiterter Einrichtebetrieb bei geöffneter Spritzschutztür,
- Messdaten zum Werkstück und/oder Werkzeug eingeben,
- Werkzeugdaten, Werkstückdaten und/oder Vorrichtungsdaten ändern.

12. Bedienpult nach einem der vorangegangenen Ansprüche, wobei die erste Bedieneinheit (1) zusätzlich zu einem als Eingabeeinheit dienenden Touch-Screen (3) ein nummerisches Tastenfeld (7) und/oder Pfeiltasten (6) als haptische Eingabeelemente aufweist, wobei die erste Bedieneinheit darüber hinaus bevorzugt nicht mehr als 10 weitere haptische Eingabeelemente umfasst.

13. Bedienpult nach einem der vorangegangenen Ansprüche, wobei die zweite Bedieneinheit (2) zusätzlich zu einem als Eingabeeinheit dienenden Touch-Screen (4) einen Drehknopf (8) und/oder zwei Plus/Minustasten (9) als haptische Eingabeelemente aufweist, wobei die zweite Bedieneinheit darüber hinaus bevorzugt nicht mehr als 10 weitere haptische Eingabeelemente umfasst.

14. Werkzeugmaschine mit einem oder mehreren Bedienpulten nach einem der vorangegangenen Ansprüche, wobei es sich bevorzugt um eine Verzahnmaschine handelt.

15. Werkzeugmaschine nach Anspruch 14, mit einer dritten Bedieneinheit, welche getrennt von der ersten Bedieneinheit an einer anderen Stelle der Werkzeugmaschine angeordnet ist, wobei die dritte Bedieneinheit bevorzugt die gleiche Hardware-Ausgestaltung aufweist wie die zweite Bedieneinheit (2) und/oder wobei bevorzugt eine dritte Gruppe an Bedienfunktionen der Werkzeugmaschine nur über die dritte Bedien-Einheit zur Verfügung stehen.

## Claims

1. Control panel for operating a machine tool comprising at least a first and a second operating unit (1, 2),
wherein the two operating units (1, 2) each comprise at least one screen (3, 4) and at least one input element (3, 4, 6-11), **characterised in that** the screens (3, 4) of the two operating units (1, 2) each have a resolution of at least 50,000 pixels, and wherein the screen (3, 4) of at least one of the operating units (1, 2) is configured as a touch screen,
wherein the second operating unit is operable in a portable manner, and
wherein a first group of machine tool operating functions is available only via the first operating unit (1) and a second group of machine tool operating functions is available only via the second operating unit (2).

2. Control panel according to claim 1, wherein the screens of the two operating units (1, 2) each have a resolution of at least 300,000 pixels and/or wherein the screens (3, 4) of the two operating units are configured as touch screens.

3. Control panel according to claim 1 or 2, wherein the contents presented on the screen (4) of the second operating unit (2) do not constitute an exactly identical representation or only constitute a scaled representation of the current screen content of the screen (3) of the first operating unit (1).

4. Control panel according to any one of the preceding claims, wherein the second operating unit (2) is releasably connectable to the first operating unit in a defined coupling position via a mechanical and/or electromechanical coupling assembly (5) so that the two operating units (1, 2) are usable in parallel with one another, wherein the screens (3, 4) of the first and second operating unit (2) are arranged at an angle to one another in the coupling position, preferably pivoted about a horizontal axis.

5. Control panel according to any one of the preceding claims, wherein the second operating unit comprises an emergency stop switch (10) and/or an accepting button (11).

6. Control panel according to any one of the preceding claims, wherein the second operating unit (2) is connected to the first operating unit (1) wirelessly or via a cable (12) and/or can be switched for use with a plurality of machine tools.

7. Control panel according to any one of the preceding claims, wherein the second operating unit (2) comprises a first and a second subunit (14, 15), wherein the first subunit (14) comprises the screen (4) and is releasably connected to the second subunit (15), and wherein the second subunit (15) comprises at least one haptic input element, in particular an emergency stop switch (10), wherein the first subunit (14) is preferably operable wirelessly and/or wherein preferably only one subgroup of the second group of operating functions is available via the first subunit (14) if it is separate from the second subunit (15).

8. Control panel according to any one of the preceding claims, wherein the first group of operating functions is used for programming the machine tool, in particular for inputting tool data, workpiece data and/or device data and/or for calling up service functions and/or wherein machine status information is displayed on the screen of the first operating unit.

9. Control panel according to any one of the preceding claims, wherein manual control of at least one actuator of the machine tool is carried out exclusively via the second operating unit (2), wherein it is preferably the drive of at least one movement axis of a machining head (44) of the machine tool, and/or wherein manual control of actuators of the machine tool and/or safety-critical functions is carried out exclusively via the second operating unit (2).

10. Control panel according to any one of the preceding claims, wherein an opening of a safety fence of the machine tool and/or axis movements of the machine tool (40) and/or of a workpiece automation (50), which are carried out when the safety fence is open, can be triggered exclusively via the second operating unit.

11. Control panel according to any one of the preceding claims, wherein the second group of operating functions serves to adapt a programming of the machine tool carried out by the first group of operating functions during operation and/or to input tool data, workpiece data and/or device data specific to a concrete machining operation and/or to control the machine tool during operation, wherein the second group of operating functions comprises in particular one or more of the following control and/or input functions:
- activating/deactivating automatic operating mode
- moving axes, in particular axes of a machining head
- controlling of feed speed and/or rotation speed of tool and/or workpiece
- fast-forward switching
- manual centring on the machining position,
- coolant on/off,
- request door opener,
- teaching, operating automation and/or moving into start-up position,
- tool change,
- tool identification using a camera,
- installation mode with splash protection door open or closed,
- extended installation mode when the splash protection door is open,
- inputting measurement data for the workpiece and/or tool,
- modifying tool data, workpiece data and/or device data.

12. Control panel according to any one of the preceding claims, wherein the first operating unit (1) comprises, in addition to a touch screen (3) serving as an input unit, a numeric keypad (7) and/or arrow keys (6) as haptic input elements, wherein the first operating unit furthermore preferably comprises no more than 10 further haptic input elements.

13. Control panel according to any one of the preceding claims, wherein the second operating unit (2) comprises, in addition to a touchscreen (4) serving as an input unit, a rotary knob (8) and/or two plus/minus buttons (9) as haptic input elements, wherein the second operating unit furthermore preferably comprises no more than 10 further haptic input elements.

14. Machine tool comprising one or more control panels according to any one of the preceding claims, wherein it is preferably a gear cutting machine.

15. Machine tool according to claim 14, comprising a third operating unit, which is arranged at another location of the machine tool separately from the first operating unit, wherein the third operating unit preferably has the same hardware configuration as the second operating unit (2) and/or wherein preferably a third group of operating functions of the machine tool is available only via the third operating unit.

## Revendications

1. Pupitre de commande destiné à utiliser une machine-outil avec au moins une première et une deuxième unité d'utilisation (1, 2),
dans lequel les deux unités d'utilisation (1, 2) comprennent respectivement au moins un écran (3, 4) et au moins un élément de saisie (3, 4, 6 - 11), **caractérisé en ce que** les écrans (3, 4) des deux unités d'utilisation (1, 2) présentent respectivement au moins une résolution de 50000 pixels, et dans lequel l'écran (3, 4) d'au moins une des unités d'utilisation (1, 2) est configuré en tant qu'écran tactile,
dans lequel la deuxième unité d'utilisation peut fonctionner de manière portative, et
dans lequel un premier groupe de fonctions d'utilisation de la machine-outil est mis à disposition seulement par l'intermédiaire de la première unité d'utilisation (1) et un deuxième groupe de fonctions d'utilisation de la machine-outil est mis à disposition seulement par l'intermédiaire de la deuxième unité d'utilisation (2).

2. Pupitre de commande selon la revendication 1, dans lequel les écrans des deux unités d'utilisation (1, 2) présentent respectivement au moins une résolution de 300000 pixels et/ou dans lequel les écrans (3, 4) des deux unités d'utilisation sont configurés en tant qu'écran tactile.

3. Pupitre de commande selon la revendication 1 ou 2, dans lequel les contenus représentés à l'écran (4) de la deuxième unité d'utilisation (2) ne constituent pas une représentation exactement identique ou seulement avec une taille mise à l'échelle du contenu instantané d'écran de l'écran (3) de la première unité d'utilisation (1).

4. Pupitre de commande selon l'une quelconque des revendications précédentes, dans lequel la deuxième unité d'utilisation (2) peut être reliée de manière amovible à la première unité d'utilisation dans une position de couplage définie par l'intermédiaire d'un ensemble de couplage (5) mécanique et/ou électromécanique de sorte que les deux unités d'utilisation (1, 2) peuvent être employées en parallèle l'une à l'autre pour utilisation, dans lequel les écrans (3, 4) de la première et de la deuxième unité d'utilisation (2) sont disposés dans la position de couplage selon un angle l'un par rapport à l'autre de préférence de manière pivotée autour d'un axe horizontal.

5. Pupitre de commande selon l'une quelconque des revendications précédentes, dans lequel la deuxième unité d'utilisation comprend un interrupteur d'arrêt d'urgence (10) et/ou une touche d'assentiment (11).

6. Pupitre de commande selon l'une quelconque des revendications précédentes, dans lequel la deuxième unité d'utilisation (2) est reliée à la première unité d'utilisation (1) sans fil ou par l'intermédiaire d'un câble (12) et/ou peut être commutée pour l'utilisation avec plusieurs machines-outils.

7. Pupitre de commande selon l'une quelconque des revendications précédentes, dans lequel la deuxième unité d'utilisation (2) présente une première et une deuxième sous-unité (14, 15), dans lequel la première sous-unité (14) comprend l'écran (4) et est reliée de manière amovible à la deuxième sous-unité (15), et dans lequel la deuxième sous-unité (15) comprend au moins un élément de saisie haptique, en particulier un interrupteur d'arrêt d'urgence (10), dans lequel la première sous-unité (14) peut fonctionner de préférence sans fil et/ou dans lequel de préférence seulement un sous-groupe du deuxième groupe de fonctions d'utilisation est mis à disposition par l'intermédiaire de la première sous-unité (14) si celle-ci est séparée de la deuxième sous-unité (15).

8. Pupitre de commande selon l'une quelconque des revendications précédentes, dans lequel le premier groupe de fonctions d'utilisation sert à la programmation de la machine-outil, en particulier à la saisie de données d'outil, de données de pièce et/ou de données de dispositif et/ou à appeler des fonctions de services et/ou dans lequel des informations de statut de machine sont affichées sur l'écran de la première unité d'utilisation.

9. Pupitre de commande selon l'une quelconque des revendications précédentes, dans lequel un pilotage manuel d'au moins un actionneur de la machine-outil est effectué exclusivement par l'intermédiaire de la deuxième unité d'utilisation (2), dans lequel l'entraînement est de préférence au moins un axe de déplacement d'une tête d'usinage (44) de la machine-outil, et/ou dans lequel un pilotage manuel d'actionneurs de la machine-outil et/ou de fonctions essentielles en matière de sécurité est effectué exclusivement par l'intermédiaire de la deuxième unité d'utilisation (2).

10. Pupitre de commande selon l'une quelconque des revendications précédentes, dans lequel une ouverture d'une clôture de sécurité de la machine-outil et/ou des déplacements d'axe de la machine-outil (40) et/ou d'une automatisation d'usinage de pièces (50), lesquels sont effectués lorsque la clôture de sécurité est ouverte, peuvent être déclenchés exclusivement par l'intermédiaire de la deuxième unité d'utilisation.

11. Pupitre de commande selon l'une quelconque des revendications précédentes, dans lequel le deuxième groupe de fonctions d'utilisation sert à adapter une programmation, réalisée par le premier groupe de fonctions d'utilisation, de la machine-outil lors du fonctionnement et/ou à saisir des données d'outil, des données de pièce et/ou des données de dispositif spécifiques à une opération d'usinage concrète, et/ou à piloter la machine-outil lors du fonctionnement, dans lequel le deuxième groupe de fonctions d'utilisation comprend en particulier une ou plusieurs des fonctions de pilotage et/ou de saisie suivantes :
- activer/désactiver le mode de fonctionnement automatique
- déplacer des axes, en particulier des axes d'une tête d'usinage
- pilotage vitesse d'avancement et/ou vitesse de rotation de l'outil et/ou de la pièce
- commutation avance rapide
- centrage manuel sur la position d'usinage,
- liquide de refroidissement marche/arrêt,
- demander ouverture porte,
- apprendre, utiliser automatisation et/ou déplacer en position de démarrage,
- changement d'outil,
- identification d'outil par l'intermédiaire d'une caméra,
- mode d'installation avec porte de protection anti-projection ouverte ou fermée,
- mode d'installation étendu lorsque la porte de protection anti-projection est ouverte,
- saisir données de mesure concernant la pièce et/ou l'outil,
- modifier données d'outil, données de pièce et/ou données de dispositif.

12. Pupitre de commande selon l'une quelconque des revendications précédentes, dans lequel la première unité d'utilisation (1) présente, en plus d'un écran tactile (3) faisant office d'unité de saisie, un clavier numérique (7) et/ou des touches fléchées (6) en tant qu'éléments de saisie haptiques, dans lequel la première unité d'utilisation ne comprend par ailleurs de préférence pas plus de 10 autres éléments de saisie haptiques.

13. Pupitre de commande selon l'une quelconque des revendications précédentes, dans lequel la deuxième unité d'utilisation (2) présente, en plus d'un écran tactile (4) faisant office d'unité de saisie, un bouton rotatif (8) et/ou deux touches plus/moins (9) en tant qu'éléments de saisie haptiques, dans lequel la deuxième unité d'utilisation ne comprend par ailleurs de préférence pas plus de 10 autres éléments de saisie haptiques.

14. Machine-outil avec un ou plusieurs pupitres e commande selon l'une quelconque des revendications précédentes, dans lequel il s'agit de préférence d'une machine à tailler les engrenages.

15. Machine-outil selon la revendication 14, avec une troisième unité d'utilisation, laquelle est disposée sur un autre emplacement de la machine-outil de manière séparée de la première unité d'utilisation, dans laquelle la troisième unité d'utilisation présente de préférence la même configuration de matériel que la deuxième unité d'utilisation (2) et/ou dans laquelle de préférence un troisième groupe de fonctions d'utilisation de la machine-outil est disponible seulement par l'intermédiaire de la troisième unité d'utilisation.
